# FASCICULE DE BREVET EUROPEEN

(11) **EP 2 960 153 B1**
(45) Date de publication et mention de la délivrance du brevet: **10.05.2023**
(21) Numéro de dépôt: 15173389.6
(22) Date de dépôt: 23.06.2015
(51) Int. Cl.: B64C 25/40, H02P 9/00, H02P 3/12

(54) **PROCÉDÉ DE GESTION D'UN MOTEUR ÉLECTRIQUE**
STEUERUNGSVERFAHREN EINES ELEKTROMOTORS
METHOD FOR MANAGING AN ELECTRIC MOTOR

(30) Priorité: 25.06.2014 FR 1455930
(43) Date de publication de la demande: 30.12.2015
(73) Titulaire: Safran Landing Systems, 78140 Vélizy-Villacoublay (FR)
(72) Inventeur: Jaber, Sylvain, 78140 VELIZY-VILLACOUBLAY (FR); Cekic, Raffi, 78140 VELIZY-VILLACOUBLAY (FR)
(74) Mandataire: Lavialle, Bruno François Stéphane

(56) Documents cités:
- EP-A1- 1 911 146
- EP-A1- 2 733 843
- EP-B1- 1 911 146
- US-A1- 2014 156 130
- Messier-Bugatti: "electric green taxiing system", , 12 June 2013 (2013-06-12), XP055476306, Retrieved from the Internet: URL:https://www.arts-et-metiers.asso.fr/ma nifestation_cr/678_compte_rendu.pdf [retrieved on 2018-05-17]

## Description

L'invention concerne un procédé de gestion d'un moteur électrique destiné à entraîner en rotation une roue d'aéronef. Ce procédé permet de protéger le moteur électrique contre la force électromotrice apparaissant lorsque le moteur est désactivé et que l'aéronef se déplace au sol à vitesse élevée.

### ARRIERE PLAN DE L'INVENTION

Afin de permettre des économies de carburant et de réduire le bruit et la pollution engendrés par le fonctionnement des réacteurs au sol, il a été proposé d'assurer le déplacement d'un aéronef sur une zone aéroportuaire sans l'aide des réacteurs, en motorisant certaines roues de l'aéronef.

La motorisation des roues de l'aéronef utilise généralement, pour chaque roue motorisée de l'aéronef, un moteur électrique destiné à entraîner la roue en rotation.

Lorsque le moteur électrique n'est pas utilisé pour entraîner la roue de l'aéronef et que l'avion se déplace au sol, le rotor du moteur électrique est entraîné en rotation par la rotation de la roue, ce qui génère une certaine force électromotrice entres les phases du moteur électrique. Lorsque la vitesse au sol de l'aéronef est élevée, notamment lors des phases de décollage et d'atterrissage, cette force électromotrice augmente de manière importante et risque d'endommager le moteur électrique. On utilise donc un dispositif de débrayage permettant de déconnecter mécaniquement le moteur électrique de la roue au cours de ces phases. Ce type de dispositif est généralement relativement lourd et complexe à cause des niveaux importants de couple à transmettre et de la fiabilité requise.

Le document US 2014/156130 A1 dévoile un procédé de gestion d'un moteur électrique destiné à entraîner en rotation une roue d'une automobile. Ce document enseigne de court-circuiter les phases du moteur lorsque la tension induite est trop importante pour la batterie de récupération d'énergie.

### OBJET DE L'INVENTION

L'invention telle que définie dans la revendication indépendante 1, a pour objet de protéger contre la force électromotrice évoquée plus tôt un moteur électrique destiné à entraîner en rotation une roue d'aéronef, tout en réduisant l'augmentation de la masse de l'aéronef résultant de la mise en oeuvre de cette protection.

### RESUME DE L'INVENTION

En vue de la réalisation de ce but, on propose un procédé de gestion d'un moteur électrique destiné à entraîner en rotation une roue d'aéronef, le procédé comportant l'étape de court-circuiter des phases du moteur électrique lorsque l'aéronef se trouve dans une période de désactivation du moteur au cours de laquelle on prévoit de ne pas utiliser le moteur électrique.

En court-circuitant les phases du moteur électrique lorsque l'aéronef se trouve dans la période de désactivation, on empêche la formation d'une force électromotrice qui, lorsque la vitesse au sol de l'aéronef est importante, est susceptible d'endommager le moteur électrique. Le court-circuitage des phases du moteur électrique peut être effectué grâce à des interrupteurs (électriques, électromécaniques) dont l'utilisation génère une augmentation de la masse de l'aéronef nettement inférieure à celle résultant de l'utilisation de dispositifs de débrayage mécanique traditionnels.

### BREVE DESCRIPTION DES DESSINS

L'invention sera mieux comprise à la lumière de la description qui suit en référence aux figures des dessins annexés parmi lesquelles :
- la figure 1 représente un aéronef ainsi qu'une vue de détail de l'aéronef montrant un atterrisseur principal portant deux roues adaptées à être entraînées en rotation par des moteurs électriques sur lesquels le procédé de gestion de l'invention est mis en oeuvre ;
- la figure 2 représente un moteur électrique tel que celui évoqué plus tôt, un onduleur alimentant ce moteur, et un organe de commutation destiné à court-circuiter entre elles les phases du moteur ;
- la figure 3 représente le moteur électrique, l'onduleur et l'organe de commutation alors que les phases du moteur ne sont pas court-circuitées ;
- la figure 4 représente le moteur électrique, l'onduleur et l'organe de commutation alors que les phases du moteur sont court-circuitées ;
- la figure 5 est un graphique illustrant un courant de court-circuit du moteur électrique en fonction de la vitesse de rotation de la roue ;
- la figure 6 est un graphique illustrant un couple parasite du moteur électrique en fonction de la vitesse de rotation de la roue.

### DESCRIPTION DETAILLEE DE L'INVENTION

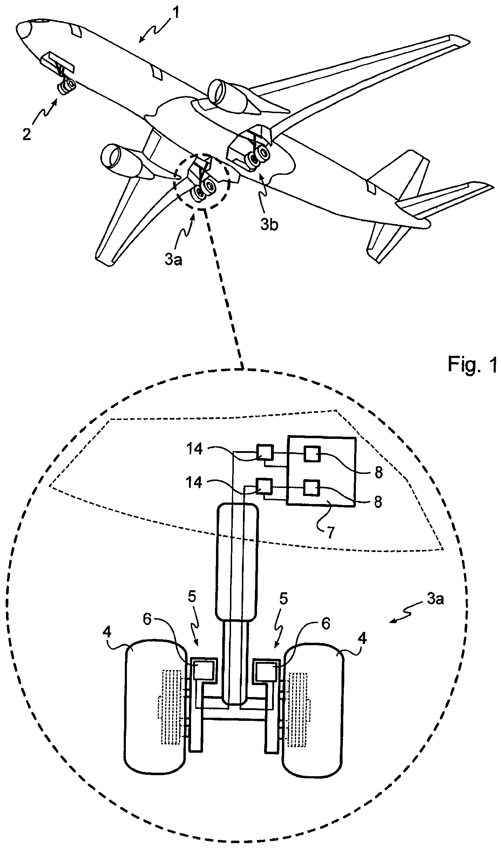

En référence à la figure 1, l'invention est ici mise en oeuvre sur un aéronef 1 comportant un atterrisseur auxiliaire 2 et deux atterrisseurs principaux 3a, 3b.

On décrit l'invention en référence uniquement à l'atterrisseur principal 3a, l'intégralité de cette description étant applicable à l'autre atterrisseur principal 3b.

L'atterrisseur principal 3a est muni de deux roues 4. Des moyens d'entraînement en rotation 5 des roues 4 sont installés sur l'atterrisseurs principal 3a. Ces moyens d'entraînement 5, représentés schématiquement sur la figure 1, comportent pour chaque roue 4 un actionneur d'entraînement comprenant un moteur électrique 6 destiné à entraîner la roue 4 en rotation.

Les moteurs électriques 6 sont des moteurs électriques synchrones triphasés à aimants permanents.

Les moteurs électriques 6 sont pilotés par un calculateur de pilotage 7 associé aux deux roues 4 de l'atterrisseur principal 3a. Le calculateur de pilotage 7 contient notamment, pour chaque moteur électrique 6, un onduleur 8 connecté au moteur électrique 6.

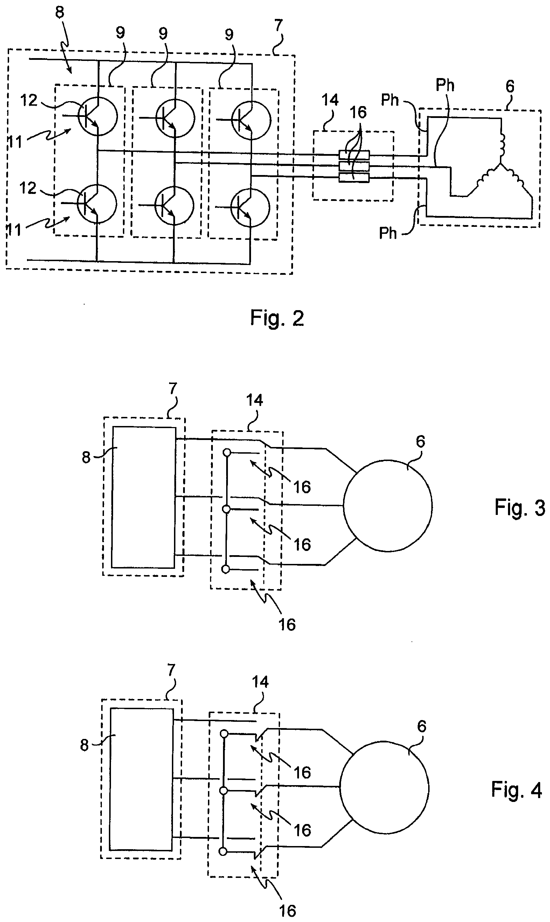

En référence à la figure 2, chaque onduleur 8 est destiné à délivrer au moteur électrique 6 associé une tension d'alimentation pour que le moteur électrique 6 entraîne en rotation la roue 4 à une vitesse de rotation commandée et selon un sens de rotation commandé. L'onduleur 8 comporte classiquement trois cellules de commutation 9, reliées chacune à une phase Ph du moteur électrique 6, et dont les commandes décalées permettent de former un système triphasé de courants et de tensions. Chaque cellule de commutation 9 comprend deux interrupteurs électriques 11 constitués chacun par un transistor 12 et une diode montée parallèlement au transistor et non visible sur les figures.

Le procédé de gestion d'un moteur électrique de l'invention vise à protéger le moteur électrique 6 lors de périodes de désactivation du moteur électrique 6 au cours desquelles on prévoit de ne pas utiliser le moteur électrique 6. Ces périodes de désactivation correspondent ici aux phases de vol (« Flight Phases ») comprenant le décollage et l'atterrissage. L'information relative à la phase de vol dans laquelle se trouve l'aéronef 1 est transmise à chaque instant au calculateur de pilotage 7. Au cours de ces périodes de désactivation, entre autre pendant le décollage où la vitesse de l'aéronef est environ 10 fois plus élevée que la vitesse au cours du taxiage, la vitesse au sol de l'aéronef 1 est importante, et donc la force électromotrice générée par le rotor du moteur électrique 6 entraîné par la rotation de la roue 4 est potentiellement très élevée.

La protection du moteur électrique 6 consiste à court-circuiter les phases Ph du moteur électrique 6 lors de ces périodes de désactivation du moteur, de manière à annuler cette force électromotrice.

Deux organes de commutation externes 14 sont connectés à cet effet entre le calculateur de pilotage 7 et les moteurs électriques 6 des moyens d'entraînement 5 des roues 4 du train principal 3a. Chaque organe de commutation 14 est connecté au niveau de son entrée à la sortie de l'un des onduleurs 8, et au niveau de sa sortie aux trois phases Ph du moteur électrique 6 alimenté par cet onduleur 8.

Chaque organe de commutation 14 comprend trois interrupteurs électromécaniques 16 connectés à l'onduleur 8 associé et aux trois phases Ph du moteur électrique 6, comme illustré sur les figures 3 et 4. Chaque interrupteur électromécanique 16 comprend un électroaimant et un contact. Les électroaimants des interrupteurs électromécaniques 16 sont commandés par le calculateur de pilotage 7 pour actionner sélectivement et simultanément les contacts en les amenant soit dans un premier état dans lequel chaque contact relie une cellule de commutation 9 de l'onduleur 8 à une phase Ph du moteur 6, soit dans un deuxième état dans lequel les trois phases Ph du moteur électrique 6 sont court-circuitées.

Les figures 3 et 4 illustrent respectivement l'état des interrupteurs électromécaniques 16 lorsque l'aéronef 1 se trouve dans une période d'activation au cours de laquelle on prévoit d'utiliser le moteur électrique 6, et dans une période de désactivation au cours de laquelle on prévoit de ne pas utiliser le moteur électrique 6.

Au cours de la période d'activation, les interrupteurs électromécaniques 16 sont commandés par le calculateur de pilotage 7 de manière à connecter les cellules de commutation 9 de l'onduleur 8 aux trois phases Ph du moteur électrique 6, qui peut donc être piloté normalement.

Au cours de la période de désactivation, les trois phases Ph du moteur électrique 6 sont court-circuitées et aucune force électromotrice n'est générée au sein du moteur électrique 6 par l'effet de la rotation de la roue 4.

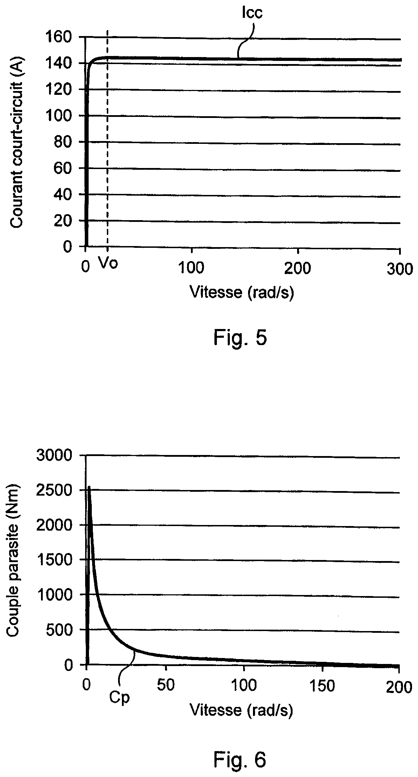

On note, en référence à la figure 5, que le courant de court-circuit Icc apparaissant dans un moteur tel que le moteur électrique 6 est quasiment constant à partie d'une faible valeur de vitesse de rotation Vo de la roue 4. La valeur de ce courant de court-circuit Icc est donc relativement facile à prévoir, ce qui permet d'anticiper efficacement l'impact thermique de ce courant de courant-circuit Icc sur le moteur électrique 6 et les éventuelles protections thermiques à mettre en œuvre au cours de la conception du moteur électrique 6.

On note de plus, en référence à la figure 6, que le couple parasite Cp associé au courant de court-circuit Ic est maximal à faible vitesse et décroît très rapidement. Au décollage, ce couple parasite Cp ajoute une faible résistance au roulement de l'aéronef 1 à faible vitesse qui décroît très rapidement et ne perturbe pas le décollage. A l'atterrissage, la vitesse de rotation de la roue 4 est très élevée au moment où elle touche le sol, le couple parasite est très faible, et la résistance au roulement ne perturbe pas l'atterrissage.

L'invention n'est pas limitée au mode de mise en œuvre particulier qui vient d'être décrit, mais, bien au contraire, couvre toute variante entrant dans le cadre de l'invention telle que définie par les revendications.

Bien que l'on ait utilisé ici pour décrire l'invention une architecture particulière et simplifiée du système d'entraînement en rotation des roues, le procédé de l'invention est bien sûr applicable à tout aéronef dont au moins une roue freinée est associée à un moteur électrique d'entraînement en rotation de la roue.

Il est par ailleurs possible, pour court-circuiter les phases, d'utiliser à la place des interrupteurs électromécaniques un ou plusieurs interrupteurs électriques de l'onduleur 7 alimentant les phases du moteur électrique 6 La suppression des contacteurs électromécaniques 14 permet un gain de masse et une hausse de la fiabilité du système.

Bien que l'on ait ici indiqué que le moteur électrique est un moteur triphasé, l'invention s'applique à des moteurs munis d'un nombre de phases différent. L'invention s'applique en particulier à un moteur monophasé, le « court-circuitage des phases » dans un moteur monophasé consistant à connecter entre elles les deux extrémités de l'enroulement du moteur.

Bien que l'on ait indiqué que les périodes de désactivation du moteur sont des périodes comprenant le décollage et l'atterrissage, ces périodes de désactivation peuvent bien sûr être définies différemment. Une période de désactivation peut ainsi comprendre une période au cours de laquelle une vitesse de l'aéronef est supérieure à un seuil de vitesse prédéterminé. On prévoit alors de transmettre au calculateur de pilotage des mesures ou estimations de la vitesse de l'aéronef, plutôt que l'information relative à la phase de vol dans laquelle se trouve l'aéronef. On note qu'en cas d'indisponibilité de la fonction de taxiage, résultant par exemple d'une défaillance d'un système de l'aéronef ou d'une perte d'alimentation, comme la position de repos du procédé de gestion du moteur électrique correspond à un état court-circuité, l'impact sur le comportement de l'aéronef est négligeable.

## Revendications

1. Procédé de gestion d'un moteur électrique (6) destiné à entraîner en rotation une roue (4) d'atterrisseur d'aéronef (1), le procédé comportant l'étape de court-circuiter les phases (Ph) du moteur électrique (6) lorsque l'aéronef (1) se trouve dans une période de désactivation du moteur (6) au cours de laquelle on prévoit de ne pas utiliser le moteur électrique (6),
la période de désactivation comprenant une période au cours de laquelle une vitesse de l'aéronef (1) est supérieure à un seuil de vitesse prédéterminé, ou la période de désactivation comprenant une phase de décollage et/ou une phase d'atterrissage de l'aéronef (1).

2. Procédé de gestion d'un moteur électrique selon la revendication 1, dans lequel le court-circuitage des phases (Ph) du moteur électrique (6) est réalisé par au moins un interrupteur électrique d'un onduleur (8) délivrant une tension d'alimentation au moteur électrique (6) .

3. Procédé de gestion d'un moteur électrique selon la revendication 1, dans lequel le court-circuitage des phases (Ph) du moteur électrique (6) est réalisé par au moins un interrupteur électromécanique (16) connecté aux phases du moteur électrique.

## Patentansprüche

1. Steuerungsverfahren eines Elektromotors (6), der dazu bestimmt ist, ein Rad (4) eines Fahrwerks eines Luftfahrzeugs (1) in Drehung anzutreiben, wobei das Verfahren den Schritt des Kurzschließens der Phasen (Ph) des Elektromotors (6) umfasst, wenn sich das Luftfahrzeug (1) in einer Deaktivierungsperiode des Motors (6) befindet, während der man vorsieht, den Elektromotor (6) nicht zu benutzen,
wobei die Deaktivierungsperiode eine Periode umfasst, während der eine Geschwindigkeit des Luftfahrzeugs (1) größer als ein vorbestimmter Geschwindigkeitsschwellenwert ist, oder die Deaktivierungsperiode eine Startphase und/oder eine Landephase des Luftfahrzeugs (1) umfasst.

2. Steuerungsverfahren eines Elektromotors (6) nach Anspruch 1, bei dem das Kurzschließen der Phasen (Ph) des Elektromotors (6) durch mindestens einen elektrischen Schalter eines Wechselrichters (8) erfolgt, der eine Versorgungsspannung an den Elektromotor (6) liefert.

3. Steuerungsverfahren eines Elektromotors (6) nach Anspruch 1, bei dem das Kurzschließen der Phasen (Ph) des Elektromotors (6) durch mindestens einen elektromechanischen Schalter (16) erfolgt, der an die Phasen des Elektromotors angeschlossen ist.

## Claims

1. Method for managing an electric motor (6) intended to drive rotationally a wheel (4) of an aircraft (1), the method comprising the step of short-circuiting the phases (Ph) of the electric motor (6) when the aircraft (1) is in a period of deactivation of the motor (6) during which it is envisaged not using the electric motor (6),
the deactivation period comprising a period during which a speed of the aircraft (1) is greater than a predetermined speed threshold, or the deactivation period comprising a take-off phase and/or a landing phase of the aircraft (1).

2. Method for managing an electric motor according to Claim 1, wherein short-circuiting of the phases (pH) of the electric motor (6) is performed by means of an electric switch of an inverter (8) supplying a supply voltage to the electric motor (6).

3. Method for managing an electric motor according to Claim 1, wherein short-circuiting of the phases (Ph) of the electric motor (6) is performed by means of at least one electromechanical switch (16) connected to the phases of the electric motor.
